# EUROPÄISCHE PATENTSCHRIFT

(11) **EP 2 071 255 B1**
(45) Veröffentlichungstag und Bekanntmachung des Hinweises auf die Patenterteilung: **18.07.2018**
(21) Anmeldenummer: 07024298.7
(22) Anmeldetag: 14.12.2007
(51) Int. Cl.: F25B 21/00, F25B 47/02

(54) **Kühl- und/oder gefriergerät mit einem magnetischen Kühler**
Refrigeration and/or freezer device with a magneto caloric cooler
Appareil de réfrigération et/ou de refroidissement utilisant l'effet magnéto-calorique

(43) Veröffentlichungstag der Anmeldung: 17.06.2009
(73) Patentinhaber: Liebherr-Hausgeräte Ochsenhausen GmbH, 88416 Ochsenhausen (DE)
(72) Erfinder: Jendrusch, Holger Dipl.-Ing., 88430 Rot an der Rot (DE); Biersch, Dietmar, 88521 Ertingen (DE); Schmid, Eugen, 88400 Mettenberg (DE); Gindele, Thomas, 88299 Leutkirch (DE); Wiest, Matthias, 88416 Hattenburg (DE)
(74) Vertreter: Herrmann, Uwe

(56) Entgegenhaltungen:
- WO-A-01/33145
- WO-A-2005/103585
- WO-A-2007/090965
- ES-A1- 2 154 564
- JP-A- 2006 308 197
- US-A- 6 094 925
- US-A1- 2005 047 284

## Beschreibung

Die Erfindung betrifft ein Kühl- und/oder Gefriergerät, das in einem Kühlmodus und das in einem Abtaumodus betreibbar ist, mit einem magnetischem Kühler, mit einem kalten Wärmetauscher zur Kühlung des Kühl- und/oder Gefrierraumes des Gerätes, mit einem warmen Wärmetauscher zur Kühlung des Wärmeträgermediums, mit einer Pumpe zur Förderung des Wärmeträgermediums sowie mit Steuermitteln, wobei die Steuermittel derart ausgeführt sind, daß in dem Kühlmodus des Gerätes das in dem magnetischen Kühler gekühlte Wärmeträgermedium dem kalten Wärmetauscher zugeführt wird.

Bei der magnetischen Kühlung wird unter Nützung des sogenannten magnetokalorischen Effektes ein Wärmeträgermedium erwärmt und abgekühlt. Die dabei ablaufenden Prozeßschritte sind üblicherweise die Magnetisierung, der Wärmeentzug, die Entmagnetisierung und die Kältenutzung, die kontinuierlich wiederholt werden. Zur Durchführung dieser Prozeßschritte sind unterschiedliche Verfahren bekannt. Denkbar ist es beispielsweise, ein feststehendes magnetokalorisches Material und einen oder mehrere rotierende Magnete einzusetzen, die das magnetokalorische Material periodisch magnetisieren und entmagnetisieren, wobei dieses eine Erwärmung sowie eine Abkühlung erfährt. Die Erwärmung bzw. Abkühlung des magnetokalorischen Materials wird dazu genutzt, um das durch den magnetischen Kühler strömende Wärmeträgermedium zu erwärmen bzw. abzukühlen.
Ein denkbarer Kältekreislauf umfaßt einen sogenannten kalten Wärmetauscher, den genannten magnetischen Kühler, einen warmen Wärmetauscher und eine Pumpe zur Förderung des Wärmeträgermediums durch den Kühlkreislauf. Während der Magnetisierung des magnetokalorischen Materials erfährt dieses eine Erwärmung. Die Wärme wird auf das durch den magnetischen Kühler strömende Wärmeträgermedium übertragen, das sich dadurch erwärmt. Das Wärmeträgermedium wird dann mittels der Pumpe in den warmen Wärmetauscher gefördert, in dem es abgekühlt wird. Im Anschluß daran erfolgt die weitere Abkühlung des Wärmeträgermediums in dem entmagnetisierten Bereich des magnetischen Kühlers. Das auf diese Weise abgekühlte Wärmeträgermedium durchströmt sodann den kalten Wärmetauscher, der zur Kühlung des Kühl- und/oder Gefriergutes dient. Das Wärmeträgermedium erwärmt sich dabei und wird sodann erneut dem magnetischen Kühler zugeführt und während der Magnetisierung des magnetokalorischen Materials durch dieses weiter erwärmt. Es gelangt dann schließlich wieder über die Pumpe zu dem warmen Wärmetauscher. Ein derartiges Kühl- und/oder Gefriergerät ist aus der Druckschrift WO 2005/103585 A1 bekannt. Während des Betriebes kann es dazu kommen, daß der kalte Wärmetauscher, der im oder im Bereich des Kühl- und/oder Gefrierraumes angeordnet ist, vereist, so daß die Notwendigkeit besteht, diesen abzutauen. Die Abtauung erfolgt üblicherweise bei abgeschalteter Pumpe und bei abgeschaltetem magnetischen Kühler und so lange, bis ein bestimmter Temperaturwert erreicht oder überschritten ist. Anschließend wird der Kühlkreislauf wie oben beschrieben wieder in Betrieb genommen und es erfolgt eine Kühlung des Kühl- bzw. Gefrierraumes mittels des von dem kalten Wärmeträgermedium durchströmten kalten Wärmetauschers.
Der vorliegenden Erfindung liegt die Aufgabe zu Grunde, ein Kühl- und/oder Gefriergerät der eingangs genannten Art dahingehend weiter zu bilden, daß die Abtaudauer reduziert wird.

Diese Aufgabe wird durch ein Kühl- und/oder Gefriergerät mit den Merkmalen des Anspruchs 1 gelöst. Danach ist vorgesehen, daß die Steuermittel des weiteren derart ausgeführt sind, daß in dem Abtaumodus des Gerätes mittels der Pumpe wenigsten zeitweise warmes Wärmeträgermedium von dem warmen Wärmetauscher zu dem kalten Wärmetauscher gefördert wird. Der vorliegenden Erfindung liegt somit der Gedanke zu Grunde, warmes Wärmeträgermedium von dem warmen Wärmetauscher unmittelbar oder mittelbar in den kalten Wärmetauscher zu fördern, um den Abtauvorgang des kalten Wärmetauschers zu beschleunigen. Diese Förderung wird mittels einer während der Abtauphase wenigstens zeitweise in Betrieb befindlichen Pumpe vorgenommen, bei der es sich vorzugsweise um die genannte Pumpe des Kühlkreislaufes handelt, die im Kühlbetrieb die Förderung des Wärmeträgermediums durchführt.

Bei aus dem Stand der Technik bekannten Geräten wird davon abweichend während der gesamten Abtauphase sowohl der magnetische Kühler als auch die Pumpe abgeschaltet.

Denkbar ist es, daß die Steuermittel derart ausgeführt sind, daß die Pumpe während der gesamten Dauer fördert, in der sich das Gerät in dem Abtaumodus befindet oder auch nur während eines oder mehrerer Zeitabschnitte während der Abtauphase.

In einer weiteren Ausgestaltung der Erfindung ist vorgesehen, daß die Steuermittel derart ausgeführt sind, daß die Pumpe wenigstens in der Anfangsphase der Abtauphase fördert. In diesem Zeitabschnitt ist das in dem warmen Wärmetauscher befindliche Wärmeträgermedium vergleichsweise warm und ist daher besonders geeignet, um die Abtaudauer des kalten Wärmetauschers zu verringern.

Während der Endphase der Abtauphase kann es dazu kommen, daß sich das in dem warmen Wärmetauscher befindliche Wärmeträgermedium weitgehend abgekühlt hat und daher nur noch eine vergleichsweise geringe Temperatur aufweist, so daß in diesem Fall vorgesehen sein kann, die Pumpe auszuschalten bzw. dieses nur noch geringfügig erwärmte Wärmeträgermedium nicht in den kalten Wärmetauscher zu fördern.

Jedoch ist es alternativ oder zusätzlich dazu möglich, daß die Steuermittel derart ausgeführt sind, dass die Pumpe wenigstens in der Endphase der Abtauphase fördert. In dieser Phase ist der Temperaturgradient zwischen dem kalten Wärmetauscher und der diesen umgebenden Luft vergleichsweise klein, so dass es gerade dann sinnvoll sein kann, das Abtauen durch die Zufuhr von warmem Wärmeträgermedium aus dem warmen Wärmetauscher zu fördern.

Denkbar ist es, einen Temperatursensor vorzusehen, der die Temperatur des warmen Wärmetauschers oder des den warmen Wärmetauscher durchströmenden Wärmeträgermediums unmittelbar oder mittelbar erfasst. Die Steuereinheit kann in diesem Falle derart ausgeführt sein, daß sie die Pumpe in Abhängigkeit davon betreibt, welche Temperatur der warme Wärmetauscher bzw. das in diesem befindliche oder diesen durchströmende Wärmeträgermedium aufweist. Denkbar ist es beispielsweise die Förderung des warmen Wärmeträgermediums aus dem warmen in den kalten Wärmetauscher nur solange vorzunehmen, solange das in dem warmen Wärmetauscher befindliche Wärmeträgermedium eine bestimmte Temperatur nicht unterschreitet.

In einer weiteren Ausgestaltung der Erfindung ist vorgesehen, dass die Steuermittel derart ausgeführt sind, dass das Wärmeträgermedium von dem warmen Wärmetauscher über die/den beim Umschalten von dem Kühlmodus auf den Abtaumodus warme Einheit/Bereich des magnetischen Kühlers zu dem kalten Wärmetauscher geführt wird. Der magnetische Kühler weist in dieser Ausgestaltung der Erfindung einen kalten und einen warmen Bereich bzw. eine kalte und eine warme Einheit auf, die sich abwechselnd in dem entmagnetisierten bzw. magnetisierten, d.h. in dem kalten bzw. warmen Zustand befinden. In dieser Ausgestaltung der Erfindung ist nun vorgesehen, dass die Strömungsführung des aus dem warmen Wärmetauscher strömenden Wärmeträgers zu dem zuletzt warmen Bereich bzw. der zuletzt warmen Einheit des magnetischen Kühlers und von dort zu dem abzutauenden kalten Wärmetauscher erfolgt, um eine möglichst hohe Temperatur des warmen Wärmeträgermediums aufrecht zu erhalten.

In weiterer Ausgestaltung der Erfindung ist vorgesehen, dass der magnetische Kühler im Abtaumodus des Gerätes ausgeschaltet ist.

Weitere Einzelheiten und Vorteile werden anhand eines in Zeichnung dargestellten Ausführungsbeispiels erläutert.

Mit dem Bezugszeichen 10 ist der magnetische Kühler gekennzeichnet, der zwei Wämetauschereinheiten 12, 14 umfaßt, die als bauliche Einheit oder auch voneinander getrennt ausgeführt sein können.

Die Wärmetauschereinheiten 12, 14 bestehen aus einem magnetokalorischen Material oder weisen ein solches Material auf.

Sie werden zyklisch magnetisiert und entmagnetisiert, wozu ein nicht dargestellter, um die Wärmetauschereinheiten 12, 14 rotierender Magnet vorgesehen ist. Je nach Position des Magneten werden die Wärmetauschereinheiten 12, 14 magnetisiert oder entmagnetisiert, was deren Erwärmung oder Abkühlung und somit auch die Erwärmung oder Abkühlung des Wärmeträgermediums zur Folge hat, das durch die Wärmetauschereinheiten 12, 14 hindurchströmt.

Das Kühl- und oder Gefriergerät weist des weiteren einen kalten Wärmetauscher 20 auf, der im oder im Bereich des Kühl- bzw. Gefrierraumes des Gerätes angeordnet ist und für dessen Kühlung sorgt. Ein warmer luftgekühlter Wärmetauscher 50 ist auf der Außenseite des Gerätes angeordnet und dient zur Wärmeabfuhr aus dem Wärmeträgermedium in die Umgebung.

Die Pumpe 100 stellt die Durchströmung des dargestellten Kühlkreislaufes mit dem Wärmeträgermedium sicher.

Stromabwärts des kalten Wärmetauschers 20 ist ein Ventil 40 angeordnet und stromabwärts des warmen Wärmetauschers 50 ist ein weiteres Ventil 30 angeordnet. Bei den Ventilen handelt es sich beispielsweise um bistabile oder monostabile Ventile.

Die Ventile 30, 40 werden während des Kühlbetriebs derart angesteuert, daß das Wärmeträgermedium von dem warmen Wärmetauscher 50 stets in die Wärmetauchereinheit 12, 14 gelangt, die gerade gekühlt bzw. entmagnetisiert ist und von dort aus in den kalten Wärmetauscher 20 gelangt. Das Ventil 40 wird derart angesteuert, daß das Wärmeträgermedium, das den kalten Wärmetauscher 20 durchströmt hat, der Wärmetauschereinheit 12/14 zugeführt wird, die sich magnetisierten Zustand befindet und daher erwärmt ist.

Zum Zwecke des Abtauens ist nun im Rahmen dieses Ausführungsbeispiels vorgesehen, daß der magnetische Kühler abgeschaltet wird, d. h. das keine periodische Magnetisierung und Entmagnetisierung der Wärmetauschereinheiten 12, 14 stattfindet. Die Pumpe 100 wird jedoch weiterbetrieben, was zur Folge hat, daß während der Abtauphase das warme, in dem warmen Wärmetauscher 50 befindliche Wärmeträgermedium über das Ventil 30 und über den ausgeschalteten magnetischen Kühler 10 in den kalten Wärmetauscher 20 gelangt und diesen erwärmt. Dadurch wird der Abtauvorgang des kalten Wärmetauschers 20 entsprechend beschleunigt. Über das Ventil 40 gelangt das Wärmeträgermedium wieder in den magnetischen Kühler 10 und von dort aus mittels der Pumpe 100 erneut zu dem warmen Wärmetauscher 50.

Während des Abtauvorganges können die Ventile 30, 40 wie während des Kühlbetriebes hin und hergeschaltet werden, erforderlich ist dies für den erfindungsgemäßen Abtauvorgang jedoch nicht. Von der Erfindung ist somit auch umfaßt, dass die Ventile während des Abtauens nicht geschaltet werden.

Die Pumpe 100 kann derart angesteuert werden, daß sie während des gesamten Abtauvorganges oder auch nur während eines oder auch mehrerer Abschnitte der Abtauphase in Betrieb ist. Wie oben ausgeführt, ist denkbar, daß die Pumpe in Abhängigkeit von der Temperatur des Wärmeträgermediums in dem warmen Wärmetauscher 50 betrieben wird.

Auch ist es denkbar, dass das warme Wärmeträgermedium unter Umgehung des magnetischen Kühlers mittels der Pumpe von dem warmen zu dem kalten Wärmetauscher und von diesem zurück zu dem warmen Wärmetauscher geführt wird. Dazu können Bypaßleitungen vorgesehen sein, die den magnetischen Kühler umgehen. In diesem Fall kann der magnetische Kühler während der Abtauphase ein- oder ausgeschaltet sein.

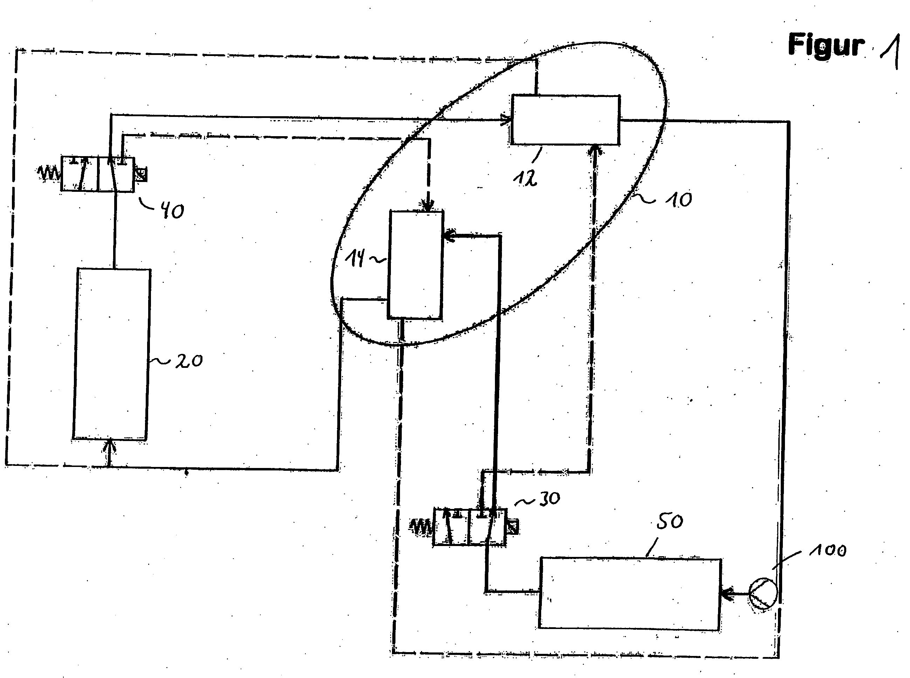

## Patentansprüche

1. Kühl- und/oder Gefriergerät, das in einem Kühlmodus und in einem Abtaumodus betreibbar ist, mit einem magnetischen Kühler, mit einem kalten Wärmetauscher (20) zur Kühlung des Kühl- und/oder Gefrierraums des Gerätes, mit einem warmen Wärmetauscher (50) zur Kühlung des Wärmeträgermediums, mit einer Pumpe (100) zur Förderung des Wärmeträgermediums sowie mit Steuermitteln, wobei die Steuermittel derart ausgeführt sind, dass in dem Kühlmodus des Gerätes das in dem magnetischen Kühler (10) gekühlte Wärmeträgermedium dem kalten Wärmetauscher (20) zugeführt wird, **dadurch gekennzeichnet, dass** die Steuermittel des Weiteren derart ausgeführt sind, dass in dem Abtaumodus des Gerätes mittels einer oder der Pumpe (100) warmes Wärmeträgermedium von dem warmen Wärmetauscher (50) zu dem kalten Wärmetauscher (20) gefördert wird.

2. Kühl- und/oder Gefriergerät nach Anspruch 1, **dadurch gekennzeichnet, dass** die Steuermittel derart ausgeführt sind, dass die Pumpe (100) während der gesamten Zeitspanne (Abtauphase) fördert, in der sich das Gerät in dem Abtaumodus befindet, oder während einer Zeitspanne, die kürzer ist als die Abtauphase.

3. Kühl- und/oder Gefriergerät nach einem der vorhergehenden Ansprüche, **dadurch gekennzeichnet, dass** die Steuermittel derart ausgeführt sind, dass die Pumpe (100) wenigstens zu Beginn der Abtauphase fördert.

4. Kühl- und/oder Gefriergerät nach einem der vorhergehenden Ansprüche, **dadurch gekennzeichnet, dass** die Steuermittel derart ausgeführt sind, dass die Pumpe (100) wenigstens zum Ende der Abtauphase fördert.

5. Kühl- und/oder Gefriergerät nach einem der vorhergehenden Ansprüche, **dadurch gekennzeichnet, dass** die Steuermittel derart ausgeführt sind, dass die Pumpe (100) nicht zu Beginn und/oder nicht zum Ende der Abtauphase fördert.

6. Kühl- und/oder Gefriergerät nach einem der vorhergehenden Ansprüche, **dadurch gekennzeichnet, dass** ein Temperatursensor vorgesehen ist, der die Temperatur des warmen Wärmetauschers oder die Temperatur des den warmen Wärmetauscher (50) durchströmenden Wärmeträgermediums erfasst und dass die Steuermittel derart ausgeführt sind, dass sie die Pumpe (100) in Abhängigkeit des mittels des Temperatursensors ermittelten Temperaturwertes betreiben.

7. Kühl- und/oder Gefriergerät nach einem der vorhergehenden Ansprüche, **dadurch gekennzeichnet, dass** die Steuermittel derart ausgeführt sind, dass das Wärmeträgermedium von dem warmen Wärmetauscher (50) über die beim Umschalten von dem Kühlmodus auf den Abtaumodus warme Einheit (12, 14) des magnetischen Kühlers (10) zu dem kalten Wärmetauscher (20) geführt wird.

8. Kühl- und/oder Gefriergerät nach einem der vorhergehenden Ansprüche, **dadurch gekennzeichnet, dass** das Kühl- und/oder Gefriergerät derart ausgeführt ist, dass der magnetische Kühler (10) im Abtaumodus ausgeschaltet ist.

## Claims

1. Refrigeration and/or freezer device, which is operable in a cooling mode and in a defrost mode, with a magnetic cooler, with a cold heat exchanger (20) for cooling the refrigeration and/or freezer compartment of the device, with a hot heat exchanger (50) for cooling the heat transfer medium, with a pump (100) for conveying the heat transfer medium as well as with control means, wherein the control means are configured such that in the cooling mode of the device, the heat transfer medium cooled in the magnetic cooler (10) is fed to the cold heat exchanger (20), **characterized in that** the control means are further configured such that in the defrost mode of the device, hot heat transfer medium is conveyed from the hot heat exchanger (50) to the cold heat exchanger (20) by means of one or the pump (100).

2. Refrigeration and/or freezer device according to claim 1, **characterized in that** the control means are configured such that the pump (100) conveys during the entire time span (defrost period) in which the device is in the defrost mode, or during a time span that is shorter than the defrost period.

3. Refrigeration and/or freezer device according to one of the preceding claims, **characterized in that** the control means are configured such that the pump (100) conveys at least at the beginning of the defrost period.

4. Refrigeration and/or freezer device according to one of the preceding claims, **characterized in that** the control means are configured such that the pump (100) conveys at least at the end of the defrost period.

5. Refrigeration and/or freezer device according to one of the preceding claims, **characterized in that** the control means are configured such that the pump (100) does not convey at the beginning and/or at the end of the defrost period.

6. Refrigeration and/or freezer device according to one of the preceding claims, **characterized in that** a temperature sensor is provided, which detects the temperature of the hot heat exchanger or the temperature of the heat transfer medium flowing through the hot heat exchanger (50) and that the control means are configured such as to operate the pump (100) depending on the temperature value detected by means of the temperature sensor.

7. Refrigeration and/or freezer device according to one of the preceding claims, **characterized in that** the control means are configured such that the heat transfer medium is routed from the hot heat exchanger (50) to the cold heat exchanger (20) via the unit (12, 14) of the magnetic cooler (10), which unit is hot when switching from the cooling mode to the defrost mode.

8. Refrigeration and/or freezer device according to one of the preceding claims, **characterized in that** the refrigeration and/or freezer device is configured such that the magnetic cooler (10) is turned-off in the defrost mode.

## Revendications

1. Appareil de réfrigération et/ou de refroidissement, pouvant être utilisé dans un mode de réfrigération et dans un mode de dégivrage, avec un refroidisseur magnétique, avec un échangeur thermique froid (20) pour refroidir le compartiment de réfrigération et/ou de refroidissement de l'appareil, avec un échangeur thermique chaud (50) pour refroidir le fluide caloporteur, avec une pompe (100) pour transporter le fluide caloporteur ainsi qu'avec des moyens de commande, lesdits moyens de commande étant conçus de sorte que le fluide caloporteur refroidi dans le refroidisseur magnétique (10), dans le mode de réfrigération de l'appareil, est acheminé jusqu'à l'échangeur thermique froid (20), **caractérisé en ce que** les moyens de commande sont également conçus de sorte qu'un fluide caloporteur chaud est transporté depuis l'échangeur thermique chaud (50) jusqu'à l'échangeur thermique froid (20) dans le mode de dégivrage de l'appareil au moyen d'une ou de la pompe (100).

2. Appareil de réfrigération et/ou de refroidissement selon la revendication 1, **caractérisé en ce que** les moyens de commande sont conçus de sorte que la pompe (100) refoule durant toute la période (phase de dégivrage) pendant laquelle l'appareil se trouve dans le mode de dégivrage, ou pendant une durée inférieure à la phase de dégivrage.

3. Appareil de réfrigération et/ou de refroidissement selon l'une quelconque des revendications précédentes, **caractérisé en ce que** les moyens de commande sont conçus de sorte que la pompe (100) refoule au moins au début de la phase de dégivrage.

4. Appareil de réfrigération et/ou de refroidissement selon l'une quelconque des revendications précédentes, **caractérisé en ce que** les moyens de commande sont conçus de sorte que la pompe (100) refoule au moins à la fin de la phase de dégivrage.

5. Appareil de réfrigération et/ou de refroidissement selon l'une quelconque des revendications précédentes, **caractérisé en ce que** les moyens de commande sont conçus de sorte que la pompe (100) ne refoule pas au début et/ou pas à la fin de la phase de dégivrage.

6. Appareil de réfrigération et/ou de dégivrage selon l'une quelconque des revendications précédentes, **caractérisé en ce qu'**un capteur de température est prévue lequel enregistre la température de l'échangeur thermique chaud ou la température du fluide caloporteur qui s'écoule à travers l'échangeur thermique chaud (50) et **en ce que** les moyens de commande sont conçus de sorte qu'ils font fonctionner la pompe (100) en fonction de la température déterminée grâce au capteur de température.

7. Appareil de réfrigération et/ou de refroidissement selon l'une quelconque des revendications précédentes, **caractérisé en ce que** les moyens de commande sont conçus de sorte que le fluide caloporteur est acheminé depuis l'échangeur thermique chaud (50) vers l'échangeur thermique froid (20) en passant par l'unité (12, 14) du refroidisseur magnétique (10) laquelle est chaude lors du passage du mode de réfrigération au mode de dégivrage.

8. Appareil de réfrigération et/ou de refroidissement selon l'une quelconque des revendications précédentes, **caractérisé en ce que** l'appareil de réfrigération et/ou de refroidissement est conçu de sorte que le refroidisseur magnétique (10) est désactivé dans le mode de dégivrage.
